# EUROPÄISCHE PATENTSCHRIFT

(11) **EP 0 489 420 B1**
(45) Veröffentlichungstag und Bekanntmachung des Hinweises auf die Patenterteilung: **25.09.1996**
(21) Anmeldenummer: 91120838.7
(22) Anmeldetag: 04.12.1991
(51) Int. Cl.: C08L 71/10, C08K 3/34

(54) **Mischungen aus Polyarylenetherketon mit Silikaten**
Mixtures of poly(arylene etherketones) and silicates
Mélanges de poly(éther-cétones d'arylène) et de silicates

(30) Priorität: 05.12.1990 DE 4038742
(43) Veröffentlichungstag der Anmeldung: 10.06.1992
(73) Patentinhaber: HOECHST AKTIENGESELLSCHAFT, 65926 Frankfurt am Main (DE)
(72) Erfinder: Lücke, Andreas, Dr., W-6251 Waldbrunn (DE); Hofmann, Ernst, W-8751 Haibach (DE)

(56) Entgegenhaltungen:
- EP-A- 0 143 407
- DE-A- 3 829 520
- US-A- 3 925 307
- CHEMICAL ABSTRACTS, Band 114, Nr. 12, 25. März 1991, Columbus, Ohio, USA HSIUNG C. M. et al. "Effect of melt spinning and cold drawing on structure and properties of poly(aryl ether ketone) (PAEK) fibers." Seite 97, Spalte 1, Zusammenfassung-Nr. 104 194e & Polym. Eng. Sci. 1991 31(3), 172-90 (Eng)

## Beschreibung

Die vorliegende Erfindung betrifft Mischungen von Hochleistungspolymeren wie Polyarylenetherketonen (PAEK) mit Alumo- und Magnesiumsilikaten, ferner die Verwendung dieser Silikate zur Stabilisierung von PAEK-Polymeren.

Eine wichtige Eigenschaft von Hochleistungspolymeren ist ihre hohe Dauergebrauchstemperatur. Diese Dauergebrauchstemperatur kann auf verschiedene Weise ermittelt werden. In der Methode nach UL 746 B wird ein sogenannter Temperatur-Index angeführt, d.h., es wird diejenige Temperatur bestimmt, bei der der Polymerwerkstoff nach 60 000 bzw. 100 000 Stunden noch die Hälfte seiner Zugfestigkeit, seiner Schlagzugfestigkeit oder seiner elektrischen Durchschlagfestigkeit aufweist.

Eine analoge Methode ist die IEC 216 (International Electrical Committee), die der DIN VDE 0304 entspricht. Nach dieser Methode wird diejenige Temperatur bestimmt, bei der nach 20 000 Stunden die Werte der mechanischen und elektrischen Eigenschaften nur noch die Hälfte betragen. Die jeweils zu prüfende Eigenschaft soll entsprechend der Anwendung ausgewählt werden. Die beiden Prüfungen sind aufwendig.

Eine einfachere, aber akkurate Methode zur Bestimmung der Dauergebrauchstemperatur besteht auch in der Messung des Gewichtsverlustes nach Lagerung im Umluftofen. Der dabei ermittelte Gewichtsverlust ist ein Maß für die thermische Alterungsbeständigkeit eines Polymerwerkstoffes. Je höher dabei der Gewichtsverlust ist, desto geringer ist die Dauergebrauchstemperatur.

Eine weitere Methode besteht in der Messung der Zersetzungstemperatur mittels thermogravimetrischer Analyse.

Es ist bekannt, daß amphotere Metalloxide, z.B. Oxide von Aluminium, Beryllium, Blei, Cadmium, Germanium, Lanthan, Mangan, Titanium, Wismut und Zink die thermisch Beständigkeit von PAEK erhöhen können; Ton oder Alumosilikate werden in dieser Schrift nicht erwähnt (US-A 3,925,307). Andererseits wird durch Beimengungen von Glas- oder Kohlenstoffasern die thermisch-oxidative Stabilität herabgesetzt.

Die Stabilität von Polyarylenetherketonen gegenüber thermisch oxidativer Alterung ist auch bekannt. Daher werden PAEK in vielen Fällen dort angewendet, wo herkömmliche Thermoplaste wegen zu hoher Umgebungstemperaturen nicht mehr geeignet sind, da sie thermisch abgebaut werden. Gerade wegen der erhöhten Anforderungen in extremen Umgebungen werden jedoch auch PAEK immer mehr bis zur Grenze ihrer Leistungsfähigkeit eingesetzt.

Ziel der vorliegenden Erfindung ist es, eine Stabilisierung für PAEK durchzuführen, die einen Abbau der PAEK oberhalb von 300 °C verlangsamt. Die erhöhte Stabilität bewirkt unter weitgehender Beibehaltung der hohen Festigkeitswerte von PAEK ihre Verwendung in den Bereichen, in denen erhöhte Sicherheitsgrenzen gefordert werden, z.B. bei Einsatz im Kraftfahrzeugmotorbereich und im Flugzeugbau.

Die Erfindung betrifft daher eine Polyarylenetherketonmischung, bestehend aus
a) einem Polyarylenetherketon mit wiederkehrenden Einheiten der allgemeinen Formel

   (-O-Ar(-L-Ar)ₓ-O-Ar-CO-(-Ar-M)_{y}-Ar-)- (I)

   in der Ar ein aromatischer Rest mit 6 bis 12 C-Atomen ist, L und M jeweils unabhängig voneinander -O-, oder -CO- sind, x und y sind jeweils Null oder eine ganze Zahl 1, 2, 3 oder 4, und das eine Schmelzefließfähigkeit (MVI 400/5) von 2 bis 250 cm³/(10 min) besitzt und
b) einem Alumo- oder Magnesiumsilikat.

In den Polyarylenetherketonen, die gemäß der Erfindung eingesetzt werden können, ist Ar vorzugsweise eine Phenylen-, Diphenyl- oder Naphthylengruppe. Vorzugsweise wird PEEKK eingesetzt. Die erfindungsgemäß in Frage kommenden Polyarylenetherketone weisen Volumenschmelzindices nach DIN 53 735 von MVI (400/5) = 2 bis 250, vorzugsweise 2 bis 100 cm³/(10 min) auf. Ihre inhärenten Viskositäten betragen mindestens etwa 0,5, vorzugsweise 0,7 bis 1,5 und besonders bevorzugt 0,8 bis 1,2 und ihre Molekulargewichte (Zahlenmittel) 5 000 bis 2 000 000, vorzugsweise 10 000 bis 1 000 000.

Polymere dieses Typs haben Glasübergangstemperaturen von 130 bis 180 °C und Schmelzpunkte von 330 bis 400 °C. Ihre hohen thermischen Übergangstemperaturen sind der Grund für die hohen Wärmeformbeständigkeiten dieser Werkstoffe.

Die eingesetzten Polyarylenetherketone werden durch Alumo- oder Magnesiumsilikate stabilisiert. Wie die Beispiele zeigen, hat ein mit Ton oder Talk modifiziertes PEEKK deutlich geringere Gewichtsverluste bei Alterung in einem Wärmeschrank als ein unmodifiziertes PEEKK und besitzt somit eine erhöhte Dauergebrauchstemperatur.

Die stabilisierten Polyarylenetherketone gemäß der Erfindung besitzen eine hohe mechanische Festigkeit, eine ausgeprägte Lösungsmittelrißbeständigkeit und eine sehr gute Chemikalienresistenz. Das Vorhandensein dieser Eigenschaften bei Polyarylenetherketonen ermöglicht ihren Einsatz nicht nur im Motor- und Maschinenbau, sondern auch in solchen Anwendungsgebieten, in denen hohe Anforderungen an die thermischen und mechanischen Eigenschaften der Polymere gestellt werden, z.B. im Automobilbau, im Maschinenbau, in der Elektrotechnik und Elektronik und im Hausgerätebereich.

Die Herstellung der erfindungsgemäß zu verwendenden Polyarylenetherketone kann in an sich bekannter Weise z.B. für das Polyetheretherketonketon (PEEKK) durch nukleophile Kondensation aus Hydrochinon und 1,4-Bis-(4'-chlor-benzoyl)-benzol oder 1,4-Bis-(4'-fluorbenzoyl)-benzol erfolgen (EP-PB 0 143 407).

Eine weitere Möglichkeit zur Herstellung von Polyarylenetherketonen der Formel (I) besteht in der Reaktion von Diacylhalogeniden mit aromatischen Verbindungen mit mindestens zwei Wasserstoffatomen in Gegenwart eines Katalysators nach Friedel-Crafts (DE-16 45 153, US-3,953,400 und US-3,965,240). Typische Ausgangsmaterialien für die Herstellung der Polyarylenetherketone mittels Friedel-Crafts-Acylierung sind Terephthaloylchlorid oder Phosgen und Diphenylether, gegebenenfalls Diphenoxybiphenyl, Diphenoxybenzol oder p-Phenoxy-benzoylchlorid.

Die Silikate, die gemäß der Erfindung eingesetzt werden, sind Kaolin oder Ton Al(Si₄O₁₀)(OH)₈ und Talk, Mg₃(Si₄O₁₀)(OH)₂.

Sie variieren jeweils in ihrer Zusammensetzung und ihren physikalischen Eigenschaften und werden in verschiedenen geographischen Stätten gefunden. Aus diesem Grund werden sie meist nach ihrer Herkunftsstätte klassifiziert. So kennt man beispielsweise Italienischen Talk, Franzözischen Talk, Talk aus der westlichen Hemisphäre wie Canada und USA, wo es zahlreiche Untergruppierungen gibt. Talk besitzt ein monoklines Kristallsystem und tritt in vielen Variationen auf. Sehr charakteristisch für Aggregate sind blättrige, schuppige, faserförmige oder dichte Massen, die als Speckstein, Steatit, Seifen- oder Topfstein bezeichnet werden. Talk besitzt eine theoretische Zusammensetzung von 31,7 Gew.-% MgO, 63,5 Gew.-% SiO₂ und 4,8 Gew.-% H₂O.

Er bildet sich am häufigsten bei der hydrothermalen Zersetzung magnesiumreicher, ultrabasischer Gesteine. In diesen Fällen ist er oft mit Neubildungen von Carbonaten des Magnesiums und bisweilen des Calciums verwachsen. Talk, der gemäß der Erfindung eingesetzt werden kann, besitzt eine mittlere Teilchengröße von 1 bis 20 µm, vorzugsweise von 1,5 bis 15 µm. Der Feinheitsgrad der verwendbaren Talktypen wird angegeben durch die Maschenweite der Filter, durch die 98 % der Teilchen abgesiebt werden. Die restlichen 2 % der Teilchen können größer sein. Die Werte für diese Größe betragen im allgemeinen 5 bis 80, vorzugsweise 7 bis 60 µm.

Die Verwendung der Begriffe Kaoline und Tone als natürliche Produkte ist nicht ganz einheitlich. Im allgemeinen bezeichnet man primäre Vorkommen von Alumosilikaten als Kaoline, sekundäre als Tone. Beide enthalten Tonminerale, von denen das wichtigste der Kaolinit ist. Die Tonminerale gehören zur Gruppe der Schichtsilikate.

Sehr reiner Ton wird z.B. im Westerwald gefunden, der durch Verwitterung des Grundgebirges auf primärer Lagerstätte entstanden ist. Anwendung finden beispielsweise auch sedimentäre Typen, deren Vorkommen häufig mit Braunkohleflözen verknüpft ist, und die infolgedessen organische Verunreinigungen enthalten können. Im allgemeinen wird Ton fein gemahlen. Die mittlere Teilchengröße beträgt 0,3 bis 5 µm, vorzugsweise 0,4 bis 2 µm. Verwendung finden können z.B. Talksorten wie Magnesium-Silikathydrat, Magnesium-Aluminium-Silikathydrat, ferner eine natürliche Verwachsung von Talk und Glimmer (Muskovit/Chlorit) im Verhältnis von 2/3 bis zu 1/3 und andere.

Durch den Einsatz der genannten Silikate können Polyarylenetherketone stabilisert werden, d.h. die Dauergebrauchstemperaturen dieser Mischungen werden gegenüber den Ausgangspolymeren oder faserverstärkten Polymeren deutlich verbessert.

### Beispiele

1.a) 7,708 kg Hydrochinon, 15,3 kg Natriumhydrogencarbonat und 70 kg Diphenylsulfon wurden in einen Rührkessel gegeben. Die Luft wurde durch Stickstoff verdrängt und die Mischung auf 140 °C erhitzt. Anschließend wurde bei 140 - 150 °C gerührt und nach dem Nachlassen der Gasentwicklung auf 210 °C erhitzt. 22,45 kg 1,4-Bis-(4-fluorbenzoyl)-benzol (BFB) wurden zugefügt. Innerhalb einer Stunde wurde die Temperatur auf 310 °C erhöht. Nach weiteren 20 Minuten wurde die Reaktionsmischung abgekühlt, zerkleinert und zur Entfernung von Salzen und Diphenylsulfon wechselweise mit Wasser und Schwefelsäure und mit Aceton gewaschen. Das Polymerpulver wurde bei 120 °C/100 mbar getrocknet. Die mittlere Korngröße des anfallenden Pulvers betrug 700 µm, die inhärente Viskosität (IV) des Polymerpulvers, gemessen nach DIN 53 735 bei 25 °C in conc. Schwefelsäure, 1,1 und der MVI (400/10 min) = 15.
1.b.1) PEEKK-Polymer aus 1a) wurde mit 15 Gew.-% Ton mit einer mittleren Teilchengröße von 1,1 µm gemischt und in einem Doppelwellenkneter der Fa. Leistritz (Nürnberg, Bundesrepublik Deutschland) bei Zylindertemperaturen von 380 bis 400 °C compoundiert und granuliert.
1.b.2) Analog Beispiel 1.b.1) wurde das PEEKK Polymer aus Beispiel 1a mit 15 Gew.-% Talk mit einer mittleren Korngröße von 4,0 µm compoundiert und granuliert.
1.c) Prüfung der thermischen Alterungsbeständigkeit
   Hierzu wurde die Gewichtsabnahme von einem PEEKK-Granulat ohne Beimischungen geprüft im Vergleich zu PEEKK-Mischungen, die mit 15 Gew.-% Ton bzw. 15 Gew.-% Talk modifiziert wurde (Beispiel 1.b.1 und 1.b.2).
2.) (Vergleich)
   Zum Vergleich wurden handelsübliche Mischungen von PEEKK mit Glas- bzw. Kohlenstoffasern der Lagerungsdauer unterworfen.

Die erhaltenen Werte aus den Versuchen, d.h. der Gewichtsverlust in %, sind in der Tabelle angeführt.

**Tabelle :**

| Lagerungsdauer im Umluftofen bei 320°C (min) | PEEKK mit 15 % Ton (%) | PEEKK mit 15 % Talk | PEEKK - | PEEKK mit 30 % GF | PEEKK mit 30 % CF |
|---|---|---|---|---|---|
| | | | - Vergleiche - | | |
| 190 | 2,0 | 1,7 | 2,2 | 2,0 | 3,0 |
| 330 | 3,3 | 3,1 | 3,6 | 3,8 | 5,7 |
| 500 | 5,3 | 4,1 | 6,5 | 7,9 | 10,9 |
| 660 | 8,9 | 7,3 | 14,5 | 18,2 | 20,9 |
| 820 | 16,5 | 14,8 | 24,7 | 38,2 | 40,2 |

Aus der Tabelle wird deutlich, daß eine Beimischung von 15 Gew.-% Ton oder 15 Gew.-% Talk den Gewichtsverlust deutlich vermindert hat, und zwar um 33 % bzw. 40 % bei einer Lagerungsdauer von 821 Stunden bei 320 °C, gegenüber dem unmodifizierten PEEKK und faserverstärktem PEEKK. Derartige Mischungen gemäß der Erfindung weisen also eine erheblich höhere Stabilität auf als die Vergleiche.

## Patentansprüche

1. Polyarylenetherketonmischung bestehend aus
a) einem Polyarylenetherketon mit wiederkehrenden Einheiten der allgemeinen Formel
(-O-Ar(-L-Ar)ₓ-O-Ar-CO-(-Ar-M)_{y}-Ar-)- (I)
in der Ar ein aromatischer Rest mit 6 bis 12 C-Atomen ist, L und M jeweils unabhängig voneinander -O-, oder -CO- sind, x und y sind jeweils Null oder eine ganze Zahl 1, 2, 3 oder 4, und das eine Schmelzefließfähigkeit nach DIN 53735 (MVI 400/5) von 2 bis 250 cm³/(10 min) besitzt und
b) einem Alumo- oder Magnesiumsilikat.

2. Mischung nach Anspruch 1, dadurch gekennzeichnet, daß die Komponente b) Ton oder Talk ist.

3. Mischung nach Anspruch 1, dadurch gekennzeichnet, daß das Alumosilikat eine mittlere Teilchengröße von 0,3 bis 5 µm, das Magnesiumsilikat eine solche von 1 bis 20 µm aufweist.

4. Mischung nach einem oder mehreren der Ansprüche 1 bis 3, dadurch gekennzeichnet, daß das Polyarylenetherketon Polyetheretherketonketon ist.

5. Verwendung von Alumo- oder Magnesiumsilikat zur Stabilisierung von Polyarylenetherketonen der allgemeinen Formel (I).

6. Verwendung nach Anspruch 5, dadurch gekennzeichnet, daß Ton oder Talk eingesetzt wird.

7. Verwendung nach Anspruch 5 oder 6 zur Hestellung einer Polyarylenetherketonmischung mit erhöhter Dauergebrauchstemperatur.

8. Verwendung der Mischung nach Anspruch 1 im Automobilbau, im Maschinenbau, in der Elektrotechnik und Elektronik, im Hausgerätebereich, im Kraftfahrzeugmotorbereich und im Flugzeugbau.

## Claims

1. A polyarylene ether-ketone mixture comprising
a) a polyarylene ether-ketone having recurring units of the formula
(-O-Ar(-L-Ar)ₓ-O-Ar-CO-(-Ar-M)_{y}-Ar-) - (I)
in which Ar is an aromatic radical having 6 to 12 carbon atoms, L and M, in each case independently of one another, are -O- or -CO- and x and y are in each case zero or an integer 1, 2, 3 or 4, and which has a melt flow index according to DIN 53735 (MVI 400/5) of 2 to 250 cm³/(10 minutes), and
b) an alumosilicate or magnesium silicate.

2. A mixture as claimed in claim 1, wherein component b) is clay or talc.

3. A mixture as claimed in claim 1, wherein the alumosilicate has an average particle size of 0.3 to 5 µm and the magnesium silicate has an average particle size of 1 to 20 µm.

4. A mixture as claimed in one or more of claims 1 to 3, wherein the polyarylene ether-ketone is polyether ether-ketone ketone.

5. The use of alumosilicate or magnesium silicate for stabilizing a polyarylene ether-ketone of the formula (I).

6. The use as claimed in claim 5, wherein clay or talc is employed.

7. The use as claimed in claim 5 or 6, for the preparation of a polyarylene ether-ketone mixture of increased long-term service temperature.

8. The use of a mixture as claimed in claim 1 in automobile construction, in mechanical engineering, in electrical engineering and electronics, in the domestic appliances sector, in the motor vehicle engine sector and in aircraft construction.

## Revendications

1. Mélange de polyarylène-éther-cétones composé
a) d'une polyarylène-éther-cétone comportant des motifs répétitifs de formule générale
(O-Ar(-L-Ar)ₓ-O-Ar-CO-(-Ar-M)_{y}-Ar-)- (I)
dans laquelle Ar est un radical aromatique avec 6 à 12 atomes de carbone, L et M chacujn, indépendamment l'un de l'autre, représentent -O- ou -CO-, x et y sont chaque fois 0 ou un nombre entier 1, 2, 3 ou 4 et qui possède une coulabilité à chaud selon la norme DIN 53 735 (MVI 400/5) de 2 à 250 cm³/10 min et
b) d'un alumino- ou d'un magnésio-silicate.

2. Mélange selon la revendication 1, caractérisé en ce que le constituant b) est l'alumine ou le talc.

3. Mélange selon la revendication 1, caractérisé en ce que l'alumino-silicate présente une granulométrie moyenne de 0,3 à 5 µm, le magnésio-silicate une granulométrie de 1 à 20 µm.

4. Mélange selon une ou plusieurs des revendications 1 à 3, caractérisé en ce que la polyarylène-éther-cétone est une polyéther-éther-cétone-cétone.

5. Utilisation de l'alumino-silicate ou de magnésio-silicate pour la stabilisation des polyarylène-éther-cétones de formule générale I.

6. Utilisation selon la revendication 5, caractérisée en ce qu'on utilise l'alumine ou le talc.

7. Utilisation selon la revendication 5 ou 6, pour la préparation d'un mélange de polyarylène-éther-cétones ayant une température d'utilisation permanente plus élevée.

8. Utilisation selon la revendication 1, dans le domaine de la construction automobile, mécanique, dans l'électrotechnique et dans l'électronique, dans les appareils ménagers, dans le domaine des moteurs d'avions et de véhicules automobiles.
